# EUROPÄISCHE PATENTSCHRIFT

(11) **EP 1 163 132 B1**
(45) Veröffentlichungstag und Bekanntmachung des Hinweises auf die Patenterteilung: **02.11.2005**
(21) Anmeldenummer: 00975805.3
(22) Anmeldetag: 28.09.2000
(51) Int. Cl.: B60S 1/40

(54) **WISCHVORRICHTUNG FÜR SCHEIBEN VON KRAFTFAHRZEUGEN**
WIPING DEVICE FOR GLASS SURFACES OF MOTOR VEHICLES
DISPOSITIF ESSUIE-GLACE POUR VEHICULES AUTOMOBILES

(30) Priorität: 28.10.1999 DE 19952054
(43) Veröffentlichungstag der Anmeldung: 19.12.2001
(73) Patentinhaber: ROBERT BOSCH GMBH, 70442 Stuttgart (DE)
(72) Erfinder: DE BLOCK, Peter, B-3545 Halen (BE)
(86) Internationale Anmeldenummer: PCT/DE2000/003392
(87) Internationale Veröffentlichungsnummer: WO 2001/030623

(56) Entgegenhaltungen:
- GB-A- 2 044 082
- US-A- 4 195 382

## Beschreibung

### Stand der Technik

Die Erfindung geht aus von einer Wischvorrichtung nach der Gattung des Anspruchs 1. Bei einer bekannten Wischvorrichtung dieser Art (DE 23 13 689A1) hat das zur Wischvorrichtung gehörige Wischblatt beziehungsweise dessen Kupplungsteil einen zu einem Grundkörper oder Kopfleiste der Wischleiste hin offenen Führungskanal, in dem eine haarnadelförmige Sicherungsfeder zwischen einer Montageposition und einer Verriegelungsposition verschiebbar ist. Diese Sicherungsfeder dient zum Öffnen beziehungsweise zum Verschließen einer in dem Kupplungsteil angeordneten Ausnehmung, welche die Lagerausnehmung für den Wischerarm-Gelenkbolzen darstellt. Die Sicherungsfeder ist zu der Kopfleiste der Wischleiste hin vorgespannt, so daß zum Verschieben der Feder die Reibung zwischen Gummi und Feder überwunden werden muß. Einerseits soll die Verschiebbarkeit der Feder für den Benutzer, beispielsweise beim Wischblattausch leichtgängig sein, andererseits muß die Feder aber während des Wischbetriebs zuverlässig die Lagerausnehmung in der Kanalwand verschließen, damit sich das Wischblatt nicht unbeabsichtigt vom Wischerarm lösen kann. Diese beiden einander gegenüber stehenden Forderungen können nicht gleichermaßen zufriedenstellend erfüllt werden.

### Vorteile der Erfindung

Bei der erfindungsgemäßen Wischvorrichtung mit den kennzeichnenden Merkmalen des Anspruchs 1 wird die Sicherung des Gelenkbolzens im Montagekanal senkrecht zur Scheibe gesehen durch die Kanalwand des in die Lagerausnehmung mündenden anderen Teilkanals gewährleistet. Die Sicherungsschulter des Wischerarms verhindert ein Herauswandern des Gelenkbolzens aus seiner Lagerausnehmung während des Wischbetriebs im Zusammenwirken mit der Gegenschulter des Wischblatts.

Um eine besonders gute Sicherung des Gelenkbolzens in seiner Lagerausnehmung zu erreichen erstreckt sich der in die Lagerausnehmung mündende andere Teilkanal in einer zur Scheibe wenigstens annähernd parallelen Ebene.

Wenn der die Einführungsöffnung aufweisende Teilkanal sich in einer auf der Scheibe stehenden Ebene erstreckt, läßt sich das Wischblatt auf einfache Weise mit dem Wischerarm verbinden.

Wenn weiter die beiden Teilkanäle mit einander einen Winkel α von 90° einschließen ergibt sich eine besonders zuverlässige Verbindung zwischen dem Wischerarm und dem Wischblatt.

In Fortbildung der Erfindung ist das Kupplungsteil aus einem elastisch nachgebenden Kunststoff gefertigt, wobei der Montagekanal in seiner Breite eine partielle Engstelle aufweist, deren Breitenmaß kleiner ist als der Durchmesser des Gelenkbolzens. Dadurch wird eine Sicherung gegen unbeabsichtigtes Lösen des Wischblatts vom Wischerarm erreicht, wenn der Wischerarm von der Scheibe weggeklappt ist, weil der Gelenkbolzen unter vorübergehender Aufweitung der Engstelle in die Lagerausnehmung des Wischblatts eingerastet wird.

Ein besonders kompakter Aufbau der Wischvorrichtung ergibt sich, wenn die Sicherungsschulter des Wischerarms zwischen dem Gelenkbolzen und dem geführten Ende des Wischerarms angeordnet ist.

Fertigungstechnische Vorteile ergeben sich, wenn die Gegenschulter des Wischblatts an dem Kupplungsteil ausgebildet ist.

In weiterer Ausgestaltung der Erfindung weist der Wischerarm an seinem freien Ende einen U-förmigen Querschnitt auf, dessen beiden U-Schenkel die Längsseiten des Kupplungsteils passend übergreifend sich von der U-Basis aus zur Scheibe erstrecken, wobei an den beiden U-Schenkeln die Enden des Kupplungsbolzens gehalten sind. Dadurch ergibt sich eine besonders gute Wischblattführung während des Wischbetriebs.

In Fortbildung des Erfindungsgedankens ist die Sicherungsschulter des Wischerarms an der Mantelfläche eines Stützbolzens ausgebildet, der mit Abstand von dem Gelenkbolzen angeordnet und mit seinen beiden Enden an den beiden U-Schenkeln des Wischerarms gehalten ist. Durch diese Maßnahme können aufwendige Fertigungs- oder Montageschritte vermieden werden.

Wenn weiter die Gegenschulter des Wischblatts an der vom Gelenkbolzen abgewandten Seitenwand einer im Kupplungsteil angeordneten, zu der von der Scheibe abgewandten Seite des Kupplungsteils offenen Quernut ausgebildet ist ergeben sich weitere Fertigungsvereinfachungen bei der Ausbildung der Wischblatt-Gegenschulter.

Damit die Sicherungsschulter des Wischerarms während der Schwingbewegung des Wischblatts die Achse des Gelenkbolzens stets mit der Gegenschulter des Wischblatts zusammenwirken kann, erstreckt sich die Quernut von ihrer Öffnung zum Nutgrund auf einer Kreisbahn, deren Radius dem Abstand zwischen dem Gelenkbolzen und dem Stützbolzen entspricht. Dadurch wird die Gelenkverbindung zwischen dem Wischerarm und dem Wischblatt in jeder Betriebsposition der Wischvorrichtung stets spielfrei gehalten und das Gelenkbolzenlager entlastet.

Um eine besonders niedrige Bauweise für die Wischvorrichtung und die damit verbundenen Vorteile zu erreichen ist das Kupplungsteil an der von der Scheibe abgewandten oberen Bandseite eines bandartig langgestreckten, federelastischen Tragelements für die Wischleiste angeordnet. Die Wischleiste selbst befindet sich an der anderen, der Scheibe zugewandten unteren Bandseite des Tragelements.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

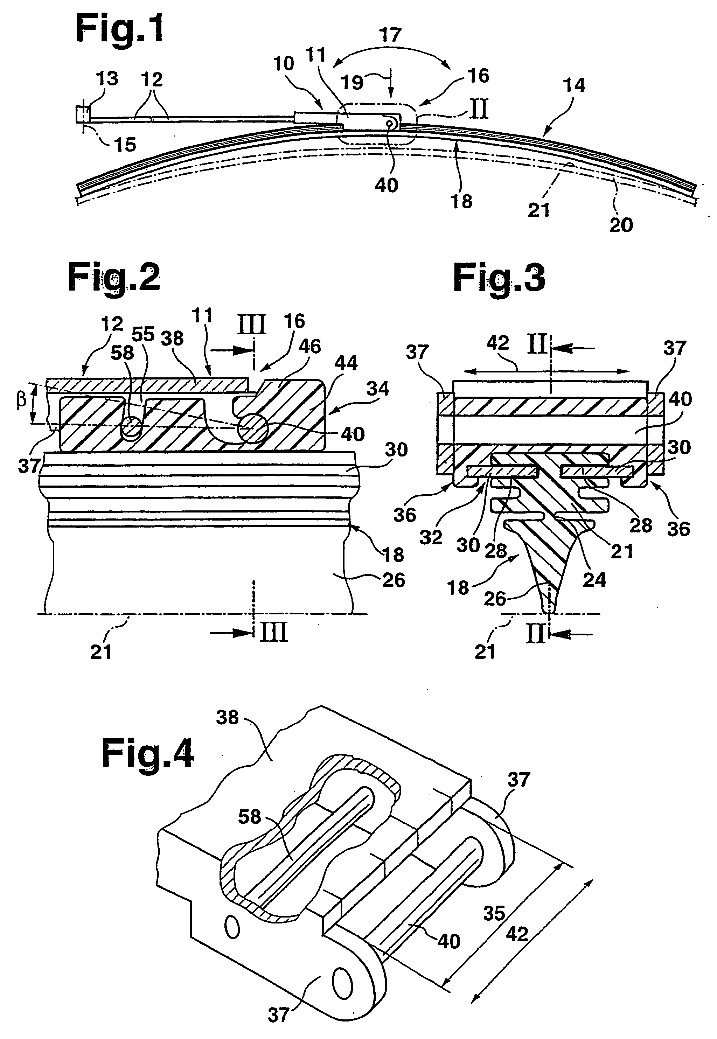

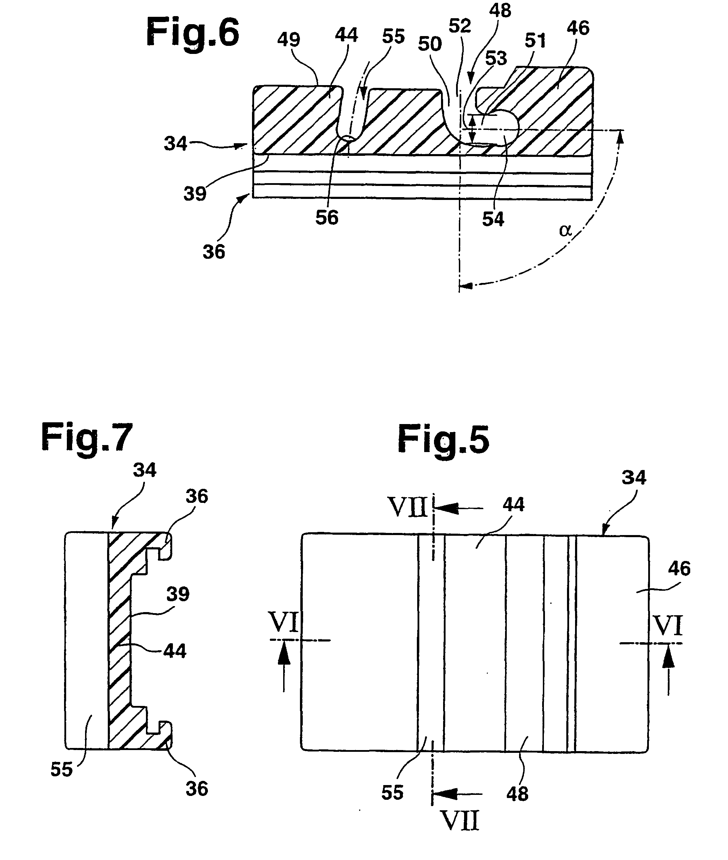

In der Zeichnung zeigen: Figur 1 eine Seitenansicht der erfindungsgemäßen Wischvorrichtung , Figur 2 eine in Figur 1 mit II bezeichnete Einzelheit, vergrößert dargestellt und in Längsrichtung des Wischblatts teilweise geschnitten wobei sich der Wischerarm und das Wischblatt zueinander in Betriebsstellung befinden, Figur 3 einen Querschnitt durch die Anordnung gemäß Figur 2 entlang der Linie III-III geschnitten, Figur 4 das freie Ende des zur Wischvorrichtung gehörenden Wischerarms teilweise geschnitten, vergrößert und perspektivisch dargestellt, Figur 5 eine Draufsicht auf ein wischblattseitiges, zur Wischvorrichtung gehörendes Kupplungsteil, Figur 6 einen Schnitt entlang der Linie VI-VI durch das Kupplungsteil gemäß Figur 5, Figur 7 einen Schnitt entlang der Linie VII-VII durch das Kupplungsteil gemäß Figur 5, und die Figuren 8 bis 10 Teil-Schnittdarstellungen entsprechend Figur 2 des Kupplungsteils und des Wischerarms mit Folgemontageschritten zwischen dem Wischblatt und dem längsgeschnittenen, freien Ende des Wischerarms.

### Beschreibung des Ausführungsbeispiels

Zu einer in Figur 1 dargestellten Wischvorrichtung 10 gehören ein einendig am Kraftfahrzeug geführter, angetriebene Wischerarm 12, der in Figur 1 verkürzt dargestellt ist. Das freie Ende des Wischerarms 12 ist in Figur 1 mit der Bezugszahl 11 versehen worden. Das andere, am Kraftfahrzeug geführte Ende des Wischerarms 12 ist mit der Bezugszahl 13 bezeichnet. Der Wischerarm pendelt beim Ausführungsbeispiel um eine am Ende 13 befindliche Pendelachse 15 quer zur Zeichnungsebene. Weiter gehört zur Wischvorrichtung 10 ein langgestrecktes Wischblatt 14, das über eine Anschlußvorrichtung 16 mit dem freien Ende 11 des Wischerarms 12 gelenkig und lösbar verbunden ist. Der Wischerarm 12 und damit auch das Wischblatt 14 sind in Richtung des Pfeiles 19 zur strichpunktiert gezeichneten Scheibe 20 belastet (Figur 1) deren zu wischenden Oberfläche in Figur 1 durch die Linie 21 angedeutet ist. Da diese Linie 21 die stärkste Krümmung der Scheibenoberfläche darstellen soll ist klar ersichtlich, daß die Krümmung des mit seinen beiden Enden an der Scheibe unbelastet angelegten Wischblatts 14 stärker ist als die maximale Krümmung der Scheibe. Unter dem Anpressdruck (Pfeil 19) legt sich da Wischblatt mit seiner Wischlippe 26 über seine gesamte Länge an der Scheibenoberfläche 21 an. Dabei baut sich einem federelastischen langgestreckten Tragelement 32 für die Wischleiste 18 eine Spannung auf, welche für eine ordnungsgemäße Anlage der Wischleiste beziehungsweise der Wischlippe über deren gesamte Länge an der Kraftfahrzeugscheibe sorgt. Weil in aller Regel die sphärisch gekrümmten Scheiben nicht Abschnitte einer Kugeloberfläche darstellen muß sich das Wischblatt 14 gegenüber dem Wischerarm 12 während seiner Arbeitsbewegung ständig der jeweiligen Lage beziehungsweise dem jeweiligen Verlauf der Scheibenoberfläche 21 anpassen können. Deshalb ist die Anschlußvorrichtung 16 gleichzeitig als Gelenkverbindung zwischen dem Wischerarm 12 und dem Wischblatt 14 ausgebildet wobei sich die Achse dieses Gelenks im wesentlichen in Wischrichtung erstreckt so daß das Wischblatt während der Wischbewegung um diese Achse in Richtung des Doppelpfeils 17 schwingen kann (Fig. 1). Wie insbesondere die Figuren 2 und 3 zeigen, hat das Wischblatt 14 eine langgestreckte, gummielastische Wischleiste 18, mit der es an der in Figur 1 dargestellten, zu wischenden Scheibe 20 angelegt werden kann. Die Wischleiste 18 hat eine Kopfleiste 22, mit der über einen Kippsteg 24 eine die eigentliche Wischarbeit übernehmende Wischlippe 26 verbunden ist. Weiter ist aus Figur 3 ersichtlich, daß in den Längsseiten der Kopfleiste 22 bezüglich einer auf der Scheibe 20 stehend angeordneten Symetrienebene einander gegenüberliegend zwei Längsnuten 28 angeordnet sind, die zur Aufnahme jeweils einer bandartig langgestreckten Federschiene 30 dienen. Die Federschienen 30 bilden zusammen ein Tragelement 32 für die Wischleiste 18. Die Ausbildung des Tragelements 32 als bandartig langgestreckte Federschiene ermöglicht eine besonders niedrige und deshalb vorteilhafte Bauweise der Wischvorrichtung. Dabei ist es gleichgültig ob - wie beim Ausführungsbeispiel - das Tragelement 32 aus mehreren Längs-Federschienen 30 besteht oder ob das Tragelement ein einteiliges Federband ist, an dessen der Scheibe 20 zugewandten Unterseite die Wischleiste befestigt ist. Die von einander abgewandten, äußeren Längskanten der Federschienen 30 ragen zumindest im Mittelabschnitt des Wischblatts aus ihren Längsnuten 28 heraus. Weiter zeigen die Figuren 1 bis 3, daß einem mittleren Längsabschnitt des Wischblatts 14 an der von der Scheibe abgewandten oberen Bandseite des Tragelements 32 ein zur Anschlußvorrichtung 16 gehörendes Kupplungsteil 34 angeordnet ist. Dieses im wesentlichen blockartige Kupplungsteil 34 umgreift mit krallenartigen Ansätzen 36 die beiden freien, äußeren Randbereiche der Federschienen 30 und sichert diese somit in ihren Längsnuten 28. Das Kupplungsteil 34 ist durch geeignete Maßnahmen fest mit der Federschiene 30 verbunden und somit in Längsrichtung des Wischblatts unverschiebbar. Der mittlere Abschnitt - an dem das Kupplungsteil 34 angeordnet werden kann - erstreckt sich über einen bestimmten Längsabschnitt zwischen den beiden Wischblattenden, des je nach Auslegung des Wischblatts von Fall zu Fall zu bestimmen ist. Die besondere Ausbildung des Kupplungsteil 34 beziehungsweise der Anschlußvorrichtung 16 zeigen die beiden Figuren 2 und 3, von denen Figur 2 das Kupplungsteil im Längsschnitt zeigt, während die an der der Scheibe 20 zugewandten Bandseite des Tragelements 32 angeordnete Wischleiste 18 samt ihren Federschienen 30 in Ansicht dargestellt sind. Der Wischerarm 12 hat an seinem freien Ende 11 einen U-förmigen Querschnitt (Figuren 2 bis 4), so daß sich zwei mit Abstand 35 voneinander, einander gegenüberliegende, sich in Längsrichtung des Wischerarms erstreckende U-Schenkel 37 ergeben, welche auf der von der Scheibe abgewandten Oberseite des Wischerarms 12 durch die U-Basis 38 miteinander verbunden sind. An den beiden U-Schenkeln 37 sind nahe dem freien Ende 11 des Wischerarms 12 die beiden Enden eines Gelenkbolzens 40 gehalten. Der Gelenkbolzen 40 erstreckt sich im wesentlichen in Bewegungsrichtung des Wischerarms, welche in Figur 4 durch einen Doppelpfeil 42 angedeutet ist. Zur leichteren Montierbarkeit des Wischblatts 14 an den Wischerarm 12 ist im Bereich des Gelenkbolzens 40 am freien Ende 11 des Wischerarms 12 die U-Basis 38 entfernt (Fig. 4).

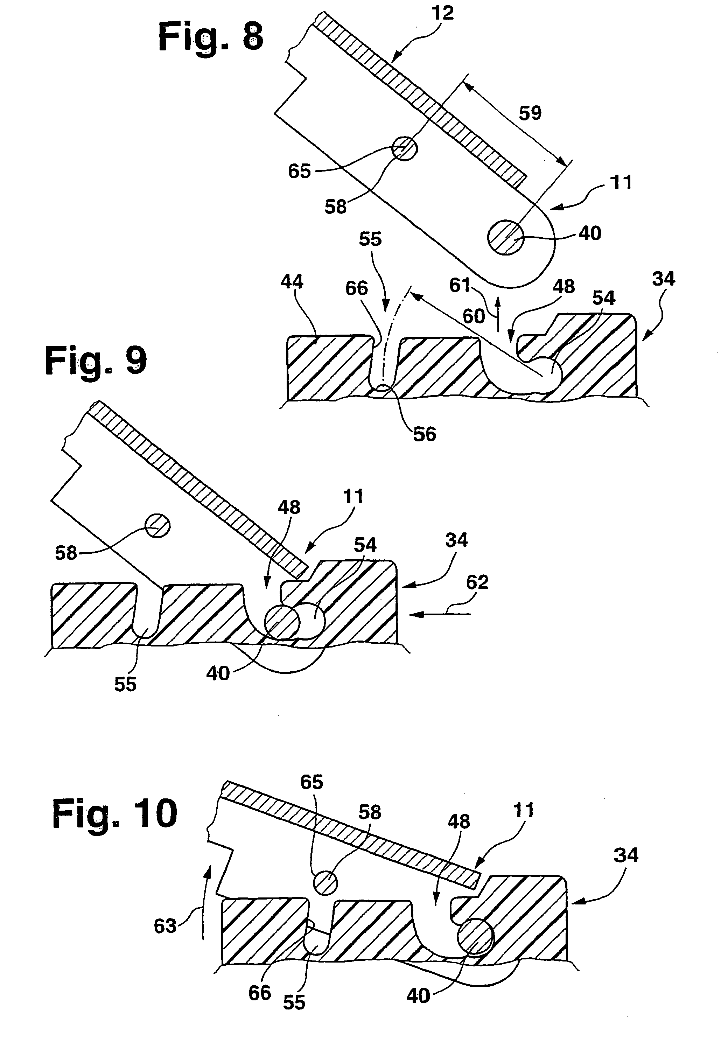

Das Kupplungsteil 34 wird im folgenden insbesondere anhand der Figuren 5 bis 7 näher beschrieben. Es hat einen im wesentlichen blockartigen Körper 44 mit den Krallen 36, über welche dieser in der schon beschriebenen Weise mit dem Tragelement 32 des Wischblatts 14 fest verbunden werden kann. Zur Aufnahme des über das Tragelement 32 hinausragende Teil der Kopfleiste 22 hat der Körper 44 an seiner Unterseite eine nutartige Längsaussparung 39 (Fig. 6 und 7). In Längsrichtung des Körpers 44 gesehen hat dieser an seiner von den Halterkrallen 36 abgewandten Oberseite 49 einen Vorsprung 46, der während des Betriebs der Wischvorrichtung zum Abdecken der vorderen Endkante des Wischerarms 12 dient (Figur 2). In seinem Längs-Mittelabschnitt ist der Körper 44 mit einem Montagekanal 48 versehen, der quer zur Längserstreckung des Kupplungsteils 34 angeordnet ist. Der Montagekanal 48 ist zur Oberseite 49 des Körpers 44 hin offen. Er hat zwei Teilkanäle 50 und 51 von denen der erste Teilkanal 50 an der Oberseite 49 mündet und an den sich in seinem weiteren Verlauf der andere Teilkanal 51 anschließt. Der andere Teilkanal 51 erstreckt sich in einer zur Scheibe wenigstens annähernd parallelen Ebene, während der eine Einführöffnung 52 der Oberseite 49 aufweisende eine Teilkanal 48 sich in einer auf der Scheibe 20 stehenden Ebene erstreckt. Wie insbesondere die Figuren 2 und 6 zeigen, weist der Verlauf des anderen Teilkanals 51 von der Pendelachse 15 (Figur 1) des Wischerarms 12 weg und mündet in eine bohrungsähnliche Lagerausnehmung 54. Die beiden Teilkanäle 50 und 51 schließen also miteinander einen Winkel α ein, der beim Ausführungsbeispiel 90° beträgt. Weiter zeigt die Figur 6, daß im Übergangsbereich zwischen dem anderen Teilkanal 51 und der Lagerausnehmung 54 eine Engstelle 53 vorgesehen ist, welche die Breite des Teilkanals 51 einengt, so daß die Wand der Lagerausnehmung 54 einen Umschlingungswinkel von mehr als 180 ° hat. Mit Abstand von dem Montagekanal 48, und zwar zur Pendelachse 15 hin, ist im Körper 44 des Kupplungsteils 34 eine Quernut 55 angeordnet, die ebenfalls an der Oberseite 49 des Körpers 44 mündet. Die Quernut 55 erstreckt von ihrer Mündung oder Öffnung aus zum Nutgrund 56 auf einer Kreisbahn, deren Zentrum identisch ist mit dem Zentrum der bohrungsartigen Lagerausnehmung 54 (Figur 8). Wie die Figuren 4 und 8 verdeutlichen ist mit Abstand 59 von dem Gelenkbolzen 40, zwischen diesem und dem geführten Ende 13 des Wischerarms 12 an dem freien Ende 11 des Wischerarms 12 ein Stützbolzen 58 angeordnet, dessen beide Enden ebenfalls an den U-Schenkeln 37 des Wischerarmendes 11 gehalten sind. Der Stützbolzen 58 erstreckt sich im wesentlichen parallel zum Gelenkbolzen 40. Der Achsenabstand zwischen den Stützbolzen 58 und dem Gelenkbolzen 40 ist in Figur 8 mit der Bezugszahl 59 versehen worden. Diesem Achsenabstand 59 entspricht dem Radius 60 der Kreisbahn, auf welche sich die Quernut 55 in ihrer Tiefe erstreckt (Figur 8).

Um das Wischblatt 14 an dem Wischerarm 12 anzuschließen sind diese beiden Bauteile in eine Position zueinander zu bringen, die aus Figur 8 ersichtlich ist. Danach wird das Wischblatt 14 mit seinem Kupplungsteil 34 in Richtung des Pfeiles 61 so zum Wischerarm 12 hinbewegt, daß dessen Gelenkbolzen 40 über die Einführöffnung 52 in den Montagekanal 48 gelangt (vergleiche Figur 9). Danach wird das Wischblatt mit seinem Kupplungsteil 34 in Richtung des Pfeiles 62 verschoben, bis der Gelenkbolzen 40 in der Lagerausnehmung 54 liegt. Die Überwindung der Engstelle 53 ist möglich, weil das Kupplungsteil 34 aus einem Kunststoff hergestellt ist, der eine gewisse Elastizität aufweist, so daß der Gelenkbolzen unter Aufwendung einer bestimmten Kraft die Engstelle, deren Breitenmaß kleiner ist als der Durchmesser des Gelenkbolzens 40, vorübergehend aufzuweiten vermag. In der in Figur 10 dargestellten Lagerposition nimmt dann die Engstelle wieder ihre ursprüngliche Ausformung ein, so daß der Gelenkbolzen 40 über mehr als 180° von der Lagerausnehmung 54 umschlungen ist. Dadurch wird eine Verrastung des Gelenkbolzens in seiner Lagerstellung erreicht, in der ein unbeabsichtigtes Lösen des Wischblatts 14 vom Wischerarm 12 verhindert wird. Damit die Wischvorrichtung 10 aus ihrer Zwischen-Montageposition (Fig. 10) in ihre endgültige Betriebsstellung gelangt, muß das Wischblatt 14 gegenüber dem Wischerarm 12 in Richtung des Pfeiles 63 geschwenkt werden, wobei der Stützbolzen 58 in die Quernut 55 gelangt (Figur 2). Dabei kann die Quernut 55 an ihrer Mündung der Oberseite 59 des Körpers 44 ebenfalls mit einer Engstelle versehen werden, welche der Engstelle 53 des Montagekanals 48 entspricht, deren Mindestmaß jedoch auf den Durchmesser des Stützbolzens 58 abgestimmt sein muß. Der Gelenkbolzen 40 bzw. dessen Längsachse bildet die Gelenkachse, um die das Wischblatt 14 seine Schwingbewegung (Doppelpfeil 17 in Fig. 1) ausführt. In der in den Figuren 2 und 3 dargestellten Betriebsstellung der Wischvorrichtung 10 übergreifen die beiden U-Schenkel 37 des freien Endes 11 des Wischerarms 12 die Längs-Seitenwangen des Kupplungsteils 34 spielfrei passend, so daß eine gute Führung des Wischblatts 14 während des Wischbetriebs (Doppelpfeil 42 in Fig. 4) gewährleistet ist. Da die Breite der Quernut 55 auf den Durchmesser des Stützbolzens 58 abgestimmt ist, bildet die Mantelfläche des Stützbolzens 58 eine Schulter 65 zum Sichern des Gelenkbolzens 40 in seiner Lagerausnehmung 54, der eine Gegenschulter des Wischblatts zugeordnet ist. Diese Gegenschulter des Wischblatts ist an der vom Gelenkbolzen 40 bzw. an der von der Lagerausnehmung 54 abgewandten Seitenwand 66 der Quernut 55 ausgebildet und wirkt mit der Sicherungsschulter des Wischerarms 12 zusammen, wenn die Wischvorrichtung 10 sich in Betriebsstellung befindet (Fig. 2). Die Tiefe der Quernut 55 muß so bemessen sein, daß die zur Wischblattanpassung an den Scheibenverlauf erforderliche maximale Schwingbewegung (Winkel β in Fig. 2) ohne Einschränkung möglich ist.

Aus dem Ausführungsbeispiel ist klar ersichtlich, daß der Montagekanal 48 im Querschnitt gesehen zwei Teilkanäle 50 und 51 hat, die mit einander einen Winkel α von weniger als 180° einschließen wobei der eine Teilkanal 50 die Einführungöffnung 52 aufweist, der andere Teilkanal 51 in die Lagerausnehmung 54 mündet und in Betriebsstellung der Wischvorrichtung eine quer zum Wischblatt ausgerichtete, den Gelenkbolzen 40 in seiner Lagerausnehmung 54 sichernde Schhulter 65 des Wischerarms 12 mit einer dieser zugeordneten, durch die Seitenwand 66 gebildeten Gegenschulter des Wischblatts zusammenwirkt.

## Patentansprüche

1. Wischvorrichtung (10) für Scheiben (20) von Kraftfahrzeugen mit einem insbesondere am Kraftfahrzeug geführten, angetriebenen Wischerarm (12), an dessen freien Ende (11) ein mit einer Wischleiste (18) an der Scheibe (20) anlegbares, langgestrecktes Wischblatt (14) über eine Anschlußvorrichtung (16) lösbar angelenkt ist, welche armseitig einen Gelenkbolzen (40) hat, dessen Gelenkachse sich im wesentlichen quer zur Längsrichtung des Wischblatts (14) in Arbeitsrichtung (Doppelpfeil 42) der Wischvorrichtung (10) erstreckt und die wischblattseitig in einem mittleren Abschnitt des Wischblatts an dessen von der Scheibe abgewandten Seite ein Kupplungsteil (34) mit einer Lagerausnehmung (54) für den Gelenkbolzen (40) aufweist, welcher über einen Montagekanal (48) in die Lagerausnehmung (54) einbringbar ist und die Einführöffnung (52) des Montagekanals an der von der Scheibe (20) abgewandten Seite des Kupplungsteils (34) angeordnet ist, **dadurch gekennzeichnet, daß** der Montagekanal (48) im Querschnitt gesehen zwei Teilkanäle (50 und 51) hat, die miteinander einen Winkel α von weniger als 180° einschließen, wobei der eine Teilkanal (50) die Einführöffnung (52) für den Gelenkbolzen (40) aufweist, der andere Teilkanal (51) in die Lagerausnehmung (54) mündet und daß in Betriebsstellung der Wischvorrichtung eine quer zum Wischblatt (14) ausgerichtete, den Gelenkbolzen in seiner Lagerausnehmung sichernde Schulter (65) des Wischerarms (12) mit einer dieser zugeordneten Gegenschulter (66) des Wischblatts (14) zusammenwirkt.

2. Wischvorrichtung nach Anspruch 1, **dadurch gekennzeichnet, daß** der in die Lagerausnehmung (54) mündende andere Teilkanal (51) sich in einer zur Scheibe (20) wenigstens annähernd parallelen Ebene erstreckt.

3. Wischvorrichtung nach einem der Ansprüche 1 oder 2, **dadurch gekennzeichnet, daß** der die Einführöffnung (52) aufweisende eine Teilkanal (50) sich in einer auf der Scheibe (20) stehenden Ebene erstreckt.

4. Wischvorrichtung nach einem der Ansprüche 1 bis 3, **dadurch gekennzeichnet, daß** die beiden Teilkanäle (50 und 51) mit einander einen Winkel α von 90° einschließen.

5. Wischvorrichtung nach einem der Ansprüche 1 bis 4, **dadurch gekennzeichnet, daß** das Kupplungsteil (34) aus einem elastisch nachgebenden Kunststoff gefertigt ist und daß der Montagekanal (48) in seiner Breite eine partielle Engstelle (53) aufweist, deren Breitenmaß kleiner ist als der Durchmesser des Gelenkbolzens (40).

6. Wischvorrichtung nach einem der Ansprüche 1 bis 5, **dadurch gekennzeichnet, daß** die Sicherungsschulter (65) des Wischerarms (12) zwischen dem Gelenkbolzen (40) und dem geführten Ende (13) des Wischerarms (12) angeordnet ist.

7. Wischvorrichtung nach einem der Ansprüche 1 bis 6, **dadurch gekennzeichnet, daß** die Gegenschulter (66) des Wischblatts (14) an dem Kupplungsteil (34) ausgebildet ist.

8. Wischvorrichtung nach einem der Ansprüche 1 bis 7, **dadurch gekennzeichnet, daß** der Wischerarm (12) an seinem freien Ende (11) einen U-förmigen Querschnitt aufweist, dessen beiden U-Schenkel (37) die Längsseiten des Kupplungsteils (34) passend übergreifend sich von der U-Basis (38) aus zur Scheibe (20) erstrecken und daß an den beiden U-Schenkeln (37) die Enden des Gelenkbolzens (40) gehalten sind.

9. Wischvorrichtung nach Anspruch 8, **dadurch gekennzeichnet, daß** die Sicherungsschulter (65) des Wischerarms (12) an der Mantelfläche eines Stützbolzens (58) ausgebildet ist, der mit Abstand (59) von dem Gelenkbolzen (40) angeordnet und mit seinen beiden Enden an den beiden U-Schenkeln (37) des Wischerarms (12) gehalten ist.

10. Wischvorrichtung nach Anspruch 9, **dadurch gekennzeichnet, daß** die Gegenschulter (66) des Wischblatts (14) an der vom Gelenkbolzen (40) abgewandten Seitenwand einer im Kupplungsteil (34) angeordneten, zu der von der Scheibe (20) abgewandten Seite des Kupplungsteils offenen Quernut (55) ausgebildet ist.

11. Wischvorrichtung nach Anspruch 10, **dadurch gekennzeichnet, daß** die Quernut (55) sich von ihrer Öffnung zum Nutgrund (56) auf einer Kreisbahn erstreckt, deren Radius (60) dem Abstand (59) zwischen dem Gelenkbolzen (40) und dem Stützbolzen (58) entspricht.

12. Wischvorrichtung nach einem der Ansprüche 1 bis 11, **dadurch gekennzeichnet, daß** das Kupplungsteil (34) an der von der Scheibe (20) abgewandten Bandseite eines bandartig langgestreckten, federelastischen Tragelements (32) für die Wischleiste (18) angeordnet ist.

13. Wischvorrichtung nach Anspruch 9, **dadurch gekennzeichnet, daß** der Durchmesser der Stützbolzen (58) kleiner ist als der Durchmesser der Gelenkbolzen (40).

## Claims

1. Wiper device (10) for windows (20) of motor vehicles, having a driven wiper arm (12) guided in particular on the motor vehicle, on the free end (11) of which arm an elongate wiper blade (14) which can be placed against the window (20) by way of a wiper strip (18) is releasably articulated via a connecting device (16) which, on the arm side, has a pivot pin (40) whose pivot axis extends substantially transversely to the longitudinal direction of the wiper blade (14) in the operating direction (double arrow 42) of the wiper device (10) and which, on the wiper blade side, in a central portion of the wiper blade on its side remote from the window, has a coupling part (34) with a bearing recess (54) for the pivot pin (40), which can be introduced into the bearing recess (54) via a mounting channel (48), and the insertion opening (52) of the mounting channel is arranged on the side of the coupling part (34) remote from the window (20), **characterized in that** the mounting channel (48) has, as seen in cross section, two partial channels (50 and 51) which form an angle α of less than 180° with one another, one partial channel (50) having the insertion opening (52) for the pivot pin (40) and the other partial channel (51) opening into the bearing recess (54), and **in that**, in the operating position of the wiper device, a shoulder (65) of the wiper arm (12), which secures the pivot pin in its bearing recess and is oriented transversely to the wiper blade (14), cooperates with a complementary shoulder (66), assigned thereto, of the wiper blade (14).

2. Wiper device according to Claim 1, **characterized in that** the other partial channel (51) opening into the bearing recess (54) extends in a plane which is at least approximately parallel to the window (20).

3. Wiper device according to either of Claims 1 and 2, **characterized in that** the one partial channel (50) having the insertion opening (52) extends in a plane situated on the window (20).

4. Wiper device according to one of Claims 1 to 3, **characterized in that** the two partial channels (50 and 51) form an angle α of 90° with one another.

5. Wiper device according to one of Claims 1 to 4, **characterized in that** the coupling part (34) is produced from an elastically resilient plastic and **in that** the mounting channel (48) has over its width a partial constriction (53) whose width dimension is less than the diameter of the pivot pin (40).

6. Wiper device according to one of Claims 1 to 5, **characterized in that** the securing shoulder (65) of the wiper arm (12) is arranged between the pivot pin (40) and the guided end (13) of the wiper arm (12).

7. Wiper device according to one of Claims 1 to 6, **characterized in that** the complementary shoulder (66) of the wiper blade (14) is formed on the coupling part (34).

8. Wiper device according to one of Claims 1 to 7, **characterized in that** the wiper arm (12) has at its free end (11) a U-shaped cross section, the two arms (37) of the U, fitting over the longitudinal sides of the coupling part (34), extend from the base (38) of the U to the window (20), and **in that** the ends of the pivot pin (40) are held on the two arms (37) of the U.

9. Wiper device according to Claim 8, **characterized in that** the securing shoulder (65) of the wiper arm (12) is formed on the lateral surface of a supporting pin (58) which is arranged with a spacing (59) from the pivot pin (40) and is held by way of its two ends on the two arms (37) of the U of the wiper arm (12).

10. Wiper device according to Claim 9, **characterized in that** the complementary shoulder (66) of the wiper blade (14) is formed on the side wall, which is remote from the pivot pin (40), of a transverse groove (55) which is arranged in the coupling part (34) and is open towards that side of the coupling part remote from the window (20).

11. Wiper device according to Claim 10, **characterized in that** the transfer groove (55) extends from its opening to the groove base (56) along a circular path whose radius (60) corresponds to the spacing (59) between the pivot pin (40) and the supporting pin (58).

12. Wiper device according to one of Claims 1 to 11, **characterized in that** the coupling part (34) is arranged on the band side, remote from the window (20), of a spring-elastic supporting element (32), which is elongate in the manner of a band, for the wiper strip (18).

13. Wiper device according to Claim 9, **characterized in that** the diameter of the supporting pin (58) is less than the diameter of the pivot pin (40).

## Revendications

1. Dispositif d'essuie-glace (10) pour des vitres (20) de véhicules automobiles comportant un bras d'essuie-glace (12) entraîné guidé notamment contre la vitre et dont l'extrémité libre (11) est articulée de manière amovible à un balai d'essuie-glace (14) s'appliquant contre la vitre (20) et ayant une lame d'essuyage (18), allongée, la liaison étant faite par un dispositif d'accouplement (16) ayant un axe d'articulation (40) au niveau du bras, cet axe d'articulation étant dirigé essentiellement transversalement à la direction longitudinale du balai d'essuie-glace (14) dans la direction de travail (double flèche 42) du dispositif d'essuie-glace (10), alors que du côté du balai d'essuie-glace, dans le segment médian du balai, le côté non tourné vers la vitre comporte une pièce d'accouplement (34) munie d'un logement de palier (54) pour l'axe d'articulation (40), cet axe s'introduisant dans la cavité de palier (54) par l'intermédiaire d'un canal de montage (48) dont l'orifice d'introduction (52) prévu sur le côté de la pièce d'accouplement (34) non tourné vers la vitre (20),
**caractérisé en ce que**
le canal de montage (48) a en vue en coupe deux canaux partiels (50, 51) faisant entre eux un angle (α) inférieur à 180°, dont un canal partiel (50) comporte l'orifice d'introduction (52) de l'axe d'articulation (40) et dont l'autre canal partiel (51) débouche dans la cavité de palier (54), et en position de fonctionnement du dispositif d'essuie-glace, un épaulement (65) du bras d'essuie-glace (12), dirigé transversalement au balai d'essuie-glace (14) et appartenant au bras (12), coopère avec un épaulement complémentaire (66) correspondant du balai d'essuie-glace (14).

2. Dispositif d'essuie-glace selon la revendication 1,
**caractérisé en ce que**
l'autre canal partiel (51) qui débouche dans la cavité de palier (54) s'étend dans un plan au moins sensiblement parallèle à la vitre (20).

3. Dispositif d'essuie-glace selon l'une des revendications 1 ou 2,
**caractérisé en ce que**
le canal partiel (50) correspondant à l'orifice d'introduction (52) s'étend dans un plan dressé par rapport à la vitre (20).

4. Dispositif d'essuie-glace selon l'une des revendications 1 à 3,
**caractérisé en ce que**
les deux canaux partiels (50, 51) font entre eux un angle (α) de 90°.

5. Dispositif d'essuie-glace selon l'une des revendications 1 à 4,
**caractérisé en ce que**
la pièce d'accouplement (34) est fabriquée en une matière plastique souple élastique, et
le canal de montage (48) présente dans sa largeur un point étroit (53), partiel dont la largeur est inférieure au diamètre de l'axe d'articulation (40).

6. Dispositif d'essuie-glace selon l'une des revendications 1 à 5,
**caractérisé en ce que**
l'épaulement de fixation (65) du bras d'essuie-glace (12) se trouve entre l'axe d'articulation (40) et l'extrémité guidée (13) du bras d'essuie-glace (12).

7. Dispositif d'essuie-glace selon l'une des revendications 1 à 6,
**caractérisé en ce que**
l'épaulement complémentaire (66) du balai d'essuie-glace (14) est réalisé sur la pièce d'accouplement (34).

8. Dispositif d'essuie-glace selon l'une des revendications 1 à 7,
**caractérisé en ce que**
le bras d'essuie-glace (12) a une section en forme de U à son extrémité libre (11) et les deux branches (37) de cette forme de U chevauchent de façon ajustée les grands côtés de la pièce d'accouplement (34) en partant de l'âme (38) de la forme de U et en étant dirigées vers la vitre (20), et
les extrémités de l'axe d'articulation (40) sont portées par les deux branches (37) de la forme en U.

9. Dispositif d'essuie-glace selon la revendication 8,
**caractérisé en ce que**
l'épaulement de fixation (65) du bras d'essuie-glace (12) est réalisé dans la surface-enveloppe d'un goujon d'appui (58) prévu à distance (59) de l'axe d'articulation (40) et par ses deux extrémités il est tenu aux deux branches de U (37) du bras d'essuie-glace (12).

10. Dispositif d'essuie-glace selon la revendication 9,
**caractérisé en ce que**
l'épaulement complémentaire (66) du balai d'essuie-glace (14) est prévu sur la paroi latérale opposée à l'axe d'articulation (40) d'une rainure transversale (55) ouverte sur le côté de la pièce d'accouplement (34) non tourné vers la vitre (20).

11. Dispositif d'essuie-glace selon la revendication 10,
**caractérisé en ce que**
la rainure transversale (55) s'étend à partir de son ouverture sur un trajet circulaire vers le fond de rainure (56), et son rayon (60) correspond à la distance (59) entre l'axe d'articulation (40) et le goujon d'appui (58).

12. Dispositif d'essuie-glace selon l'une des revendications 1 à 11,
**caractérisé en ce que**
la pièce d'accouplement (34) est prévue sur le côté de bande opposé à la vitre (20) d'un élément de support (32) élastique comme un ressort, allongé en forme de bande et recevant la lame d'essuyage (18).

13. Dispositif d'essuie-glace selon la revendication 9,
**caractérisé en ce que**
le diamètre du goujon d'appui (58) est inférieur au diamètre de l'axe d'articulation (40).
